Europäisches Patentamt

European Patent Office

Office européen des brevets

(11) Publication number: **0 086 665**
A1

## (12) EUROPEAN PATENT APPLICATION

(21) Application number: **83300763.6**

(22) Date of filing: **16.02.83**

(51) Int. Cl.³: **B 66 F 9/18**

(30) Priority: **17.02.82 GB 8204679**

(43) Date of publication of application: **24.08.83**
**Bulletin 83/34**

(84) Designated Contracting States: **AT BE CH DE FR IT LI LU NL SE**

(71) Applicant: **RODMAN'S DEVELOPMENT COMPANY LIMITED, Unit No. 3, Charter Way Hurdsfield Industrial Estate, Macclesfield Cheshire SK10 2NG (GB)**

(72) Inventor: **Rodman, Anthony Scott, 521 Chester Road, Woodford Stockport Cheshire SK7 1PR (GB)**

(74) Representative: **Funge, Harry et al, M'CAW & CO. 41-51 Royal Exchange Cross Street, Manchester M2 7BD (GB)**

(54) **Conveying apparatus.**

(57) Apparatus (31) for attachment to a fork-lift truck (30) for the conveying of articles such as pallet loads, beer barrels or the like comprises a chassis (35), a load stabilizer device (32) slidably mounted on upstanding posts (36) of the chassis (35) and at least two double acting piston/cylinder devices (38, 39) for raising and lowering the stabilizer device (32). The cylinders of the piston/cylinder devices (38, 39) are secured to each other in side-by-side disposition with the pistons extending in opposed directions, giving a large range of load height which may be carried whilst the devices (38, 39) are contained within the dimensions of the apparatus (31). The load may be carried by tines (48, 33), the outer ones (48) of which are movable outwardly to accommodate differing sized loads and the inner one (33) being detachable or pivotal to an inoperative position if not required. The chassis (35) carrying the stabilizer device (32) and the tines (48, 33) may be movable laterally of a frame (34) for correct positioning of the load.

(EP14356M)
(4.2.83)

- 1 -

## CONVEYING APPARATUS

This invention relates to conveying apparatus, and in particular to apparatus for use in conveying articles by means of a fork lift truck. The apparatus of the invention has particular application to the lifting and transporting of articles such as beer barrels which may have varying width in a vertical direction, as well as straight sided articles and pallets.

For transporting such articles it is customary to provide a plurality of tines, usually two or three, extending forwardly of the fork lift truck and the lateral spacing of such tines may be adjustable so as to accommodate articles of different size between the tines. However, particularly in the case of stacks of articles, there is a tendency for one or more articles to tip and fall from the tines. In order to counteract such a tendency a load stabilizer may be provided. Such a load stabilizer takes the form of a plate or the like which is pressed against the top of the articles being carried before lifting the same so as to prevent tilting thereof as the articles are transported.

Known load stabilizers are of appreciable weight and are supported on the front of the chassis on which the tines are mounted. In consequence the weight of the stabilizer and its location forward of the front

(EP14356M)
(4.2.83)                           - 2 -

wheels of the truck represent a severe limitation on
the usable pay load of the vehicle. A further
disadvantage of known arrangements is that in order to
accommodate a large range of load sizes hydraulic
piston/cylinder devices are used which of necessity have
a long stroke. This means that if the piston/cylinder
device is contained within the overall dimensions of
the vehicle, small loads cannot be accommodated since
the cylinder size restricts the lowering of the
stabilizer. If small loads are to be accommodated the
large cylinder required to provide an adequate stroke
must be disposed largely outside the overall dimensions
of the vehicle. In either case there are disadvantages.

In order to overcome such disadvantages it has been
proposed to use double extension piston/cylinder devices.
However in the context of load stabilizers for fork lift
trucks it is essential that the piston/cylinder devices
are double acting so that pressure can be applied to the
top of the load being carried. The provision of double
acting double extension piston/cylinder devices is
expensive and leads to very large diameter cylinders,
and in consequence does not provide a satisfactory
solution to the problem.

It is an object of the present invention to provide
conveying apparatus for use with a fork lift truck in
which such disadvantages are avoided or mitigated to a
substantial extent.

The invention provides apparatus for use in conveying
articles, said apparatus comprising a chassis, a load
stabilizer device mounted on said chassis for movement
relative thereto towards and away therefrom, and means
for effecting said movement comprising a plurality of

(EP14356M)
(4.2.83)                      - 3 -

piston/cylinder devices having their cylinders
secured to each other in side-by-side disposition
and the pistons of at least two of said devices
extending in opposed directions.

Two piston/cylinder devices may be provided with
their cylinders secured to each other in side-by-side
disposition and their pistons extending in opposed
directions in which case the devices may have
substantially the same diameters and strokes.
Alternatively three piston/cylinder devices may be
provided, in which case they may be disposed with two
outer devices having substantially the same diameters
and strokes and their pistons extending in one
direction and an inner device disposed between the
two outer devices, having substantially the same
stroke but being of larger diameter than the two outer
devices, and having its piston extending in the opposite
direction to those of the two outer devices.  Preferably
the two outer devices have in combination substantially
the same load capacity as said inner device.

The apparatus may comprise supporting means for
said articles, and said supporting means may be mounted
on said chassis, and may comprise a plurality of tines.
The supporting means may comprise two tines disposed
in spaced, substantially parallel disposition.  The
apparatus may also include a third tine disposed
between said two tines, in which case said third tine
may be hingedly secured to said chassis so as to be
pivotal between operative and inoperative positions
in which it is substantially parallel with and transverse
to the said two tines respectively.

The invention also provides a fork lift truck having

(EP14356R)
(4.2.83)                    - 4 -

apparatus as aforesaid mounted thereon.  The apparatus
may be fixedly mounted thereon or alternatively the
chassis of said apparatus may be mounted on a frame
of said fork lift truck for lateral displacement
relative to said frame.

The invention will now be further described with
reference to the accompanying drawings in which:-

Fig. 1       is a front elevation of a first embodiment,
Fig. 2       is a side elevation of the embodiment of
             Fig. 1,

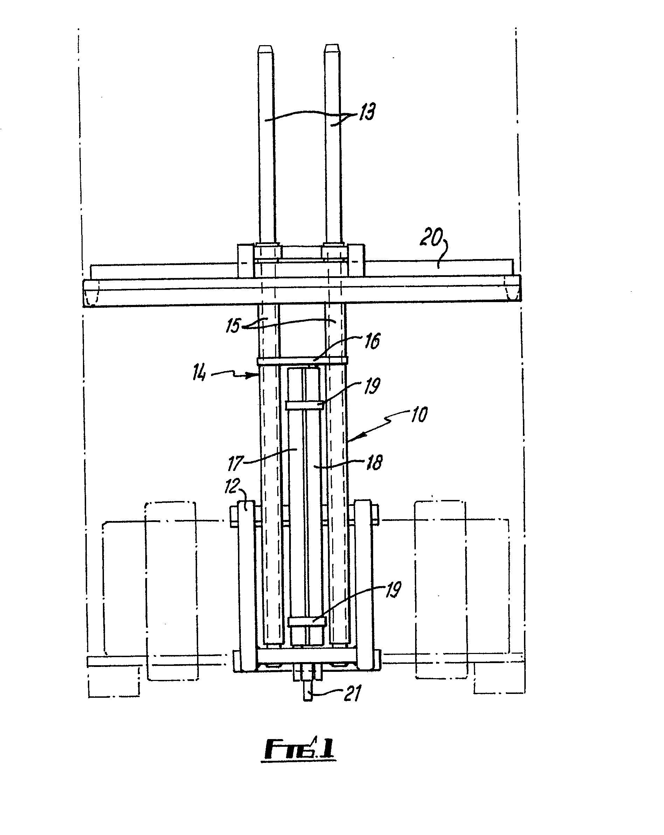

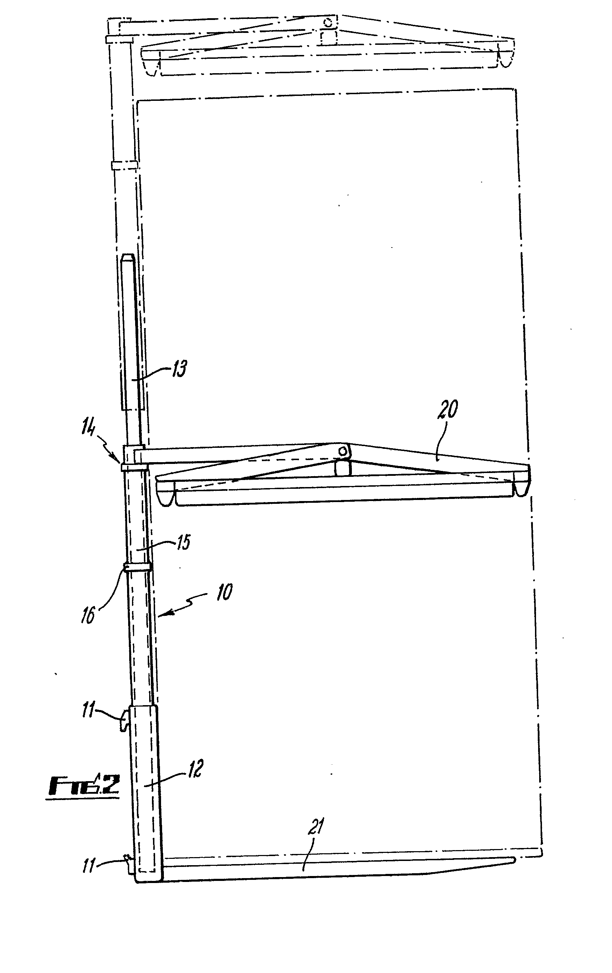

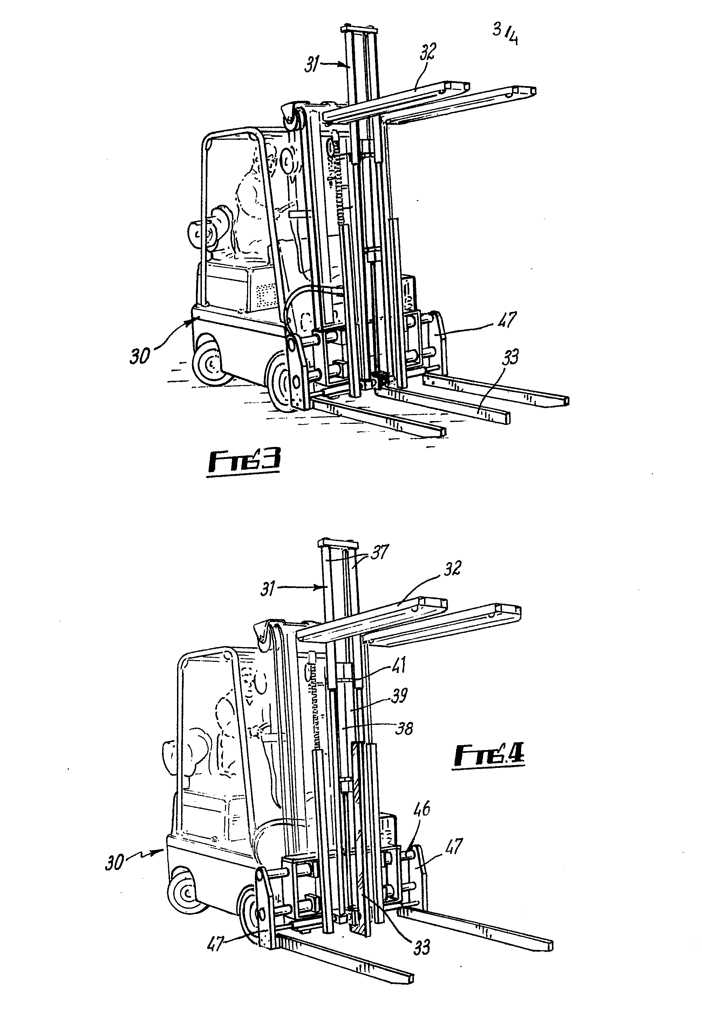

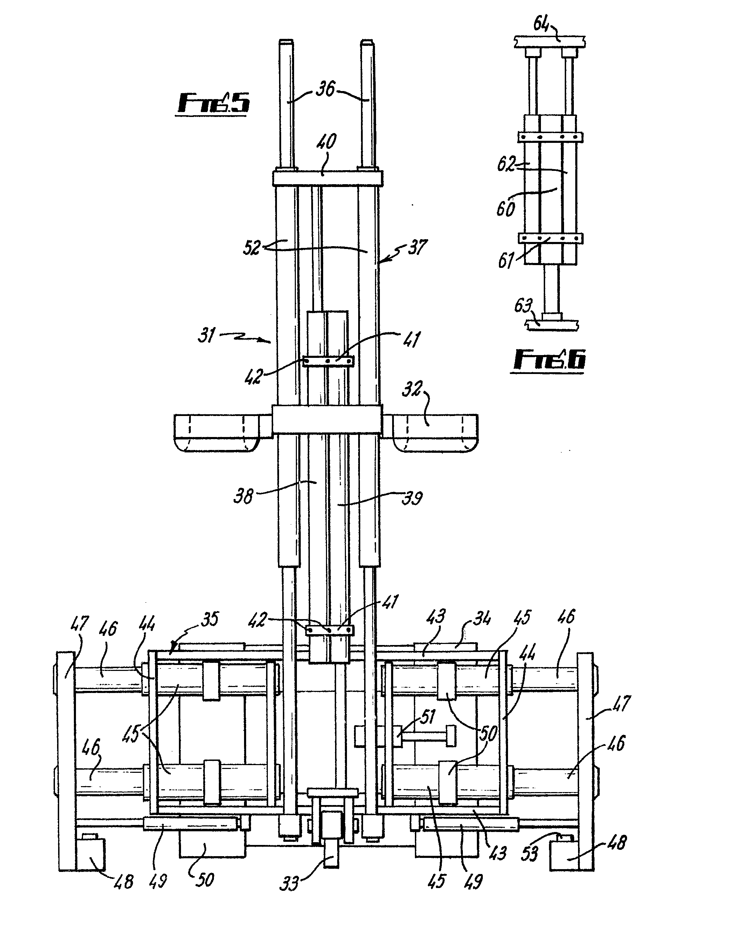

Figs. 3 and 4 are perspective views of a fork lift
             truck incorporating a second embodiment with
             a centre tine in operative and inoperative
             positions respectively,
Fig. 5       is a front elevation of the embodiment of
             Figs. 3 and 4 and
Fig. 6       is a scrap view of an alternative arrangement
             of piston/cylinder device for use in either
             of the above embodiments.

Referring now to Figs. 1 and 2 there is shown
apparatus 10 which is adapted for mounting on a frame
of a fork lift truck (partly shown in dashed lines in
Fig. 1) by means of mounting attachments 11 as shown in
Fig. 2.  The apparatus 10 comprises a chassis 12 on
which are mounted two upstanding posts 13.  A carriage
14 comprises two tubes 15 secured in spaced parallel
disposition by a cross beam 16.  Tubes 15 are a sliding
fit on posts 13 so that the carriage 14 is slidable
towards and away from chassis 12.  This movement is
effected by two piston/cylinder devices 17,18, the
cylinders of which are secured to each other in side-
by-side disposition by yokes 19.  The piston of device
17 extends downwardly and is secured to the chassis 12.

(EP14356M)
(4.2.83)                    - 5 -

The piston of device 18 extends upwardly and is secured
to cross beam 16.  Attached to the carriage 14 at the
upper ends of tubes 15 is a load stabilizer 20 which
occupies the position shown in full lines in Fig. 2
when devices 17,18 are retracted and occupies the
position shown in dashed lines in Fig. 2 when the
devices 17,18 are extended.

The devices 17,18 are double acting so that pressure
may be applied to the top of a load during lifting
and transportation thereof.  By means of the
arrangement shown the range of height of load which
may be carried by a fork lift truck using the
stabilizer 20 is twice the stroke of each piston/cylinder
device 17,18.  In consequence the devices 17,18 may
be contained within the dimensions of the apparatus 10
whilst providing a relatively large range of height of
load which may be carried.  Furthermore the devices
17,18 are relatively small and inexpensive devices by
comparison with equivalent double acting double
extension devices proposed heretofore.

With the device 10 in use the load would be carried
by the tines of the fork lift truck to which the device
is attached.  Such an arrangement may be adequate for
pallet supported loads and certain other types of loads.
However for other types of loads, for example beer
barrels, a third central tine may be required.  In the
embodiment of Figs. 1 and 2 a central tine 21 is
provided.  The tine 21 is hingedly mounted at the base
of the chassis 12 so that it can be pivoted to a
vertical position adjacent the devices 17,18 when not
required.  Alternatively the tine 21 may be detachable
for this purpose.

(EP14356M)
(4.2.83)
- 6 -

Referring now to Figs. 3 and 4 there is shown a fork lift truck 30 with a second embodiment 31 of apparatus in accordance with the invention mounted thereon. The Figs. 3 and 4 illustrate the apparatus 31 with the load stabilizer 32 in the raised position and with a central tine 33 in the operative and inoperative positions respectively. The details of the apparatus 31 are more clearly shown in Fig. 5.

In Fig. 5 the load stabilizer 32 is in an intermediate position and the central tine 33 is in the operative position. The apparatus 31 is mounted by means of a frame 34 on a fork lift truck and comprises a chassis 35 on which central tine 33 is hingedly mounted. Also mounted on chassis 35 are two posts 36 on which the carriage 37 is slidably retained. Carriage 37 is of similar construction to carriage 14 of the embodiment of Figs. 1 and 2 and carries the load stabilizer 32 in like manner. The piston/cylinder devices 38,39 raise and lower the stabilizer 32 as in the previous embodiment, the piston of device 38 being connected to cross beam 40 and the piston of device 39 being connected to chassis 35. The cylinders of devices 38,39 are secured to each other in side-by-side disposition by yokes 41 through which bolts 42 pass. In order to further secure the cylinders of devices 38,39 against relative movement in a longitudinal direction the bolts 42 engage grooves (not shown) provided in the walls of the cylinders.

The chassis 35 is of rectangular configuration and comprises top and bottom beams 43 and two pairs of upright webs 44. At each side of the chassis 35, between the respective pair of webs 44 are mounted two tubes 45. Slidably received in the tubes 45 are rods or inner tubes 46 on which a sidearm 47 is mounted, and each

(EP14356M)
(4.2.83)                  - 7 -

sidearm 47 carries a tine 48 at its lower end.  The sidearms 47 and tines 48 may be moved inwardly or outwardly by means of piston/cylinder devices 49 each of which is secured to a sidearm 47 and the chassis 35.

The tubes 45 are engaged in bearings 50 which are mounted on the frame 34, and a further piston/cylinder device 51 is attached to the frame 34 and to the chassis 35.

In general the apparatus 31 will be disposed centrally with respect to the fore and aft centre line of the fork lift truck to which it is attached.  A load is approached with the central tine 33 in its operative or inoperative position as required by the nature of the load.  The lateral disposition of the outer tines 48 may be adjusted by actuation of devices 49 if a pallet load is to be lifted.  Alternatively the tines 48 may be moved to the outside of the load, for example in the case of beer barrels and then caused to be moved inwardly to grip the load.  If the stabilizer 32 is not required the devices 38,39 may be extended fully so that the stabilizer does not interfere with the load.  If however the stabilizer is required the devices 38,39 are retracted to apply a pressure to the top of the load.  The load may then be transferred as required.  If the fork lift truck is not positioned accurately with respect to the unloading station the whole apparatus 31 may be moved laterally by actuation of device 51 which causes movement laterally relative to frame 34 of chassis 35 together with tines 33 and 48, posts 36 and stabilizer 32.  By this means the load may be moved laterally for accurate positioning prior to unloading.

(EP14356M)
(4.2.83) - 8 -

In the embodiment shown in Figs. 1 and 2 the stabilizer 20 is attached to the top of tubes 15 so that there is little structure above the top of the load when the largest size of load is being carried. This is of particular importance in the case of loading curtain sided transport vehicles which could otherwise not be loaded to capacity with light but large loads. However, in that embodiment very small loads cannot be carried if the stabilizer is required to maintain stability of the load. In the embodiment of Figs. 3 to 5 smaller loads may be carried using the stabilizer 32 since it is secured to tubes 52 of carriage 37 at a mid location. The height of the tubes 52 above stabilizer 32, together with the cylinder length of devices 38,39 governs the lowest height of the stabilizer 32 and hence the smallest load to be carried whilst making use of the stabilizer. The cylinder length of devices 38,39 and hence their stroke, governs the largest height of loads which can be carried. In this regard, to give a large range of movement of the stabilizer 32 without excessively long piston/cylinder devices 38,39, a more compact and simple arrangement is achieved with the stabilizer 32 attached to the tubes 52 and the latter sliding on fixed posts 36 than with the reverse arrangement of fixed tubes and movable posts.

The tines 43 may have stops 53 welded thereto near to their attachment to side arms 47 to limit the positioning of a load rearwardly, thus protecting the apparatus 31 and the associated fluid pressure lines from damage by the load. In the case of the embodiment of Figs. 1 and 2, which may be considered as a detachable accessory for a fork lift truck, the fluid pressure lines to the devices 17,18 preferably include self-sealing quick release coupling for

(EP14356M)
(4.2.83)                    - 9 -

connection to the hydraulic circuit of the fork lift truck.

Referring now to Fig. 6 there is shown an alternative arrangement for the piston/cylinder devices to those 17,18 of Figs. 1 and 2 or 38,39 of Fig. 5. In this case a central device 60 is secured by yokes 61 to two outer devices 62. The central device 60 extends downwardly and its piston is secured to a chassis 63 corresponding with chassis 12 or 35 of the previous embodiments. The outer devices 62 extend upwardly and their pistons are connected to a cross beam 64 corresponding with cross beams 16 or 40 of the previous embodiments. Whilst in the previous embodiments the two devices concerned were of substantially the same diameter and stroke, in this embodiment the devices have substantially the same stroke, but the outer devices 62 are of like diameter but which is smaller than that of the central device 60. The devices 62 in combination have the same load characteristics as the central device 60. Other combinations of devices may be used if desired, the combination of Fig. 6 having a reduced tendency to provide an unbalanced loading on the cross beam 64 than the arrangement of Figs. 1 or 5.

(EP14356M)
(4.2.83)                         - 10 -

Claims:

1.    Apparatus (31) for use in conveying articles comprising a chassis (35), a load stabilizer device (32) mounted on said chassis (35) for movement relative thereto towards and away therefrom, and means (38,39) operable to effect said movement characterised in that said movement means comprises a plurality of piston/cylinder devices (38,39) having their cylinders secured to each other in side-by-side disposition and the pistons of at least two of said devices (38,39) extending in opposed directions.

2.    Apparatus according to claim 1, characterised in that said stabilizer device (32) is slidably mounted on posts (36) upstanding from said chassis (35).

3.    Apparatus according to claim 1 or claim 2 characterised in that said movement means comprises two piston/cylinder devices (38,39) having substantially the same diameter and stroke.

4.    Apparatus according to claim 1 or claim 2 characterised in that said movement means comprises three piston/cylinder devices (60,62), two outer devices (60,62), two outer devices (62) having substantially the same diameter and stroke as each other and whose pistons extend in the same direction, and an inner device (60) having a larger diameter than but same stroke as said two outer devices (62) and whose piston extends in a direction opposite to that of the pistons of said two outer devices (62).

(EP14356M)
(4.2.83)                    - 11 -

5.    Apparatus according to claim 4
characterised in that
said two outer devices (62) have in combination
substantially the same load capacity as said inner
device (60).

6.    Apparatus according to any one of claims 1 to 5
characterised in that
each of said piston/cylinder devices (38,39,60,62) is
double acting.

7.    Apparatus according to any one of claims 1 to 6
characterised in that
said chassis (35) has mounted thereon a plurality of
tines (33,48) for supporting a load.

8.    Apparatus according to claim 7,
characterised in that
said chassis (35) has two tines (48) mounted thereon
in spaced, substantially parallel disposition, the
spacing of said two tines (48) being adjustable.

9.    Apparatus according to claim 8,
characterised in that a third tine (33) is mounted on
said chassis (35) between said two tines (48) so as to
be substantially parallel therewith when in an
operative position and to be movable from said
operative position.

10.  A fork-lift truck (30)
characterised by
having apparatus (31) according to any one of
claims 1 to 9 mounted thereon.

11.  A fork-lift truck (30) according to claim 10

0086665

(EP14356M)
(4.2.83)                    - 12 -

characterised in that

said chassis (35) is mounted on a frame (34) of said
truck (30) for lateral displacement relative to said
frame (34) and including means (51) for effecting said
lateral displacement.

(EP14356M)
(4.2.83)

FIG.1

FIG.2

FIG.3

FIG.4

Fig.5

Fig.6

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 272 364 (MINDRUM)<br><br>* Whole document *<br><br>--- | 1,2,4, 6,7,10 | B 66 F 9/18 |
| A | US-A-2 684 165 (HILL)<br><br>* Column 3, lines 3-12, 35-45, 65-75; column 4, lines 1-16 *<br><br>--- | 2,7,8, 10,11 | |
| A | US-A-2 682 347 (JACKSON)<br><br>* Column 4, lines 69-75; column 5, lines 1-18, 24-69 *<br><br>--- | 2,7,9, 10 | |
| A | US-A-2 807 382 (SCHENKELBERGER)<br><br>--- | | |
| A | US-A-3 174 639 (CHASE)<br><br>--- | | TECHNICAL FIELDS SEARCHED (Int. Cl. 3)<br><br>B 66 F |
| A | US-A-4 116 349 (DURHAM(<br>•<br>--- | | |
| A | DE-A-2 165 606 (KAUP GESELLSCHAFT FÜR MASCHINENBAU)<br><br>--- | | |
| A | DE-A-2 821 643 (MAYER MASCHINENBAU)<br><br>--- -/- | | |

The present search report has been drawn up for all claims

| Place of search | Date of completion of the search | Examiner |
|---|---|---|
| THE HAGUE | 19-05-1983 | VAN DEN BERGHE E.J.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

0086665

European Patent
Office

**EUROPEAN SEARCH REPORT**

Application number

EP 83 30 0763

| | DOCUMENTS CONSIDERED TO BE RELEVANT | | | Page 2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | DE-A-2 929 712 (KAUP GESELLSCHAFT FÜR MASCHINENBAU) --- | | |
| A | GB-A- 714 482 (HEUSER) --- | | |
| A | FR-A-2 390 370 (GIBERT) --- | | |
| A | FR-A-2 451 884 (TOYODA) ----- | | |
| | | | TECHNICAL FIELDS SEARCHED (Int. Cl. ³) |

The present search report has been drawn up for all claims

| Place of search | Date of completion of the search | Examiner |
|---|---|---|
| THE HAGUE | 19-05-1983 | VAN DEN BERGHE E.J.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82